# EUROPÄISCHE PATENTANMELDUNG

(11) **EP 1 081 069 A1**
(43) Veröffentlichungstag der Anmeldung: **07.03.2001**
(21) Anmeldenummer: 00113744.7
(22) Anmeldetag: 29.06.2000
(51) Int. Cl.: B65G 53/36, B65G 53/52, B65G 53/60, B65G 53/22, F16L 5/10, F16L 5/02

(54) **Manschette für die elastische Verbindung einer pneumatischen Förderleitung mit einem Schüttgutsilo**

(30) Priorität: 27.08.1999 DE 19940737
(71) Anmelder: Waeschle GmbH, 88250 Weingarten (DE)
(72) Erfinder: Wegen, Martin, 53227 Bonn (DE); Eberhard, Norbert, 88521 Ertingen (DE); Erasmus, Paul, 88212 Ravensburg (DE); Regedzinski, Wolfgang, 88213 Ravensburg (DE); Zechner, Egon, 88250 Weingarten (DE)
(74) Vertreter: Hemmelmann, Klaus

(57) **Zusammenfassung**

Eine elastische Manschette für die Verbindung einer pneumatischen Förderleitung (3) mit einem Schüttgutsilo (7) weist eine mit Verschlußmitteln (17) versehene Längsteilung (14) auf, um die Montage der Manschette zu vereinfachen. Das Verschlußmittel (17) ist bevorzugt als wasser- und/oder druckdicht verschließbarer Reißverschluß (16) ausgebildet. Um das Verschlußmittel (17) bei der Fixierung der Manschette (11) auf der Förderleitung (3) und dem Rohrstutzen (10) des Schüttgutsilos (7) mittels Spannvorrichtungen (18), beispielsweise Spannschellen nicht zu beschädigen, ist das Verschlußmittel (17) zumindest im Bereich der Spannvorrichtung durch eine Lasche (19) und/oder ein Pufferelement (20) aus elastischem Werkstoff abdeckbar.

## Beschreibung

Die Erfindung betrifft eine elastische Manschette für die Verbindung einer pneumatischen Förderleitung mit einem Schüttgutsilo.

Es ist bekannt, Schüttgüter mittels einer Fluidströmung durch eine Förderleitung von einem Aufgabeort zu einem Zielort, beispielsweise einem Schüttgutsilo zu befördern. Bedingt durch diskontinuierliche Vorgänge bei der Förderung, thermische Ausdehnung oder Windlasten entstehen im Übergangsbereich zwischen Förderleitung und Schüttgutsilo dynamische Beanspruchungen, die bei einer starren Verbindung dieser Bauteile zu Schäden im Übergangsbereich oder in den Lagerungen führen können.

Um Verschiebungen, Wärmedehnungen oder Schwingungen auszugleichen, werden im Übergangsbereich zwischen Förderleitung und Schüttgutsilo üblicherweise schlauchartige, elastische Manschetten oder Formteile angeordnet, die über das Endstück der Förderleitung und einen auf dem Silodach befindlichen Rohrstutzen geschoben und dort durch Schellen dichtend verspannt werden. Alternativ können Förderleitung und Rohrstutzen mit Ringflanschen versehen werden, die mit entsprechend ausgebildeten Flanschen der Manschette verschraubbar sind. Beim Einbau der Manschette ist in besonderem Maße darauf zu achten, daß sie dichtend an den Wandungen von Rohrstutzen und Förderleitung anliegt, um eine Verschmutzung des Siloinhalts durch eindringendes Regenwasser zu verhindern. Bei der pneumatischen Druck- oder Saugförderung liegt im Inneren der Manschette außerdem ein Über- bzw. Unterdruck an, der beispielsweise gegenüber dem Umgebungsdruck um 0,5 bar abweichen kann. Die Manschette ist daher so auszuführen, daß sie dieser Druckdifferenz gasdicht standhält.

Die herkömmliche Montage der Manschette ist insbesondere dann aufwendig, wenn die Förderleitung durch den Rohrstutzen geführt wird und in das Innere des Schüttgutsilos hineinragt. Der Rohrstutzen weist in diesem Fall einen größeren Durchmesser als die Förderleitung auf.

Eine derartige Anordnung wird gewählt, um die Schallemissionen beim Befüllen zu reduzieren. Bei der Montage muß die Manschette zuerst vom Silodach her in zusammengefaltetem Zustand durch den Ringraum zwischen Förderleitung und Rohrstutzen geschoben, um das auskragende Ende der Förderleitung herumgeführt werden und nachfolgend wieder durch den Ringraum nach oben gezogen werden, bevor sie mit Befestigungsmitteln an der Förderleitung und dem Rohrstutzen fixiert wird. Alternativ kann das Endsegment der Förderleitung demontiert werden.

### Aufgabe

Der Erfindung liegt die Aufgabe zugrunde, eine elastische Manschetten bereitzustellen, die auf einfache Weise zwischen Förderleitung und Schüttgutsilo montierbar ist.

### Lösung

Die Aufgabe wird dadurch gelöst, daß die Manschette eine mit Verschlußmitteln versehene Längsteilung aufweist.

Die Längsteilung ermöglicht es, die Manschette in einfacher Weise um die zu verbindenden Rohrteile herumzuführen. Durch die Verschlußmittel kann die Manschette mit geringem Aufwand wieder zu einem schlauchförmigen Bauteil geschlossen werden. Ein stoffschlüssiges Verschließen der Längsteilung, beispielsweise durch Verkleben oder Verschweißen der Manschette entlang des Teilungsschnitts, kann auf dem Silodach in der Regel nicht mit vertretbarem Zeitaufwand oder der geforderten Sorgfalt durchgeführt werden. Aus den eingangs genannten Gründen wird das Verschlußmittel bevorzugt so ausgeführt, daß es wasser und/oder gasdicht verschließbar ist.

Weitere bevorzugte Ausführungsformen der Erfindung sind den Unteransprüchen zu entnehmen.

### Figuren

Die Erfindung wird nachfolgend anhand der schematisch dargestellten Figuren ausführlich erläutert.

Es zeigen:
- Fig. 1: eine Anlage zur pneumatischen Förderung von Schüttgut unter Verwendung einer erfindungsgemäßen elastischen Manschette
- Fig. 2: eine perspektivische Darstellung einer konischen, mittels eines Reißverschlusses verschließbaren Manschette
- Fig. 3: einen Querschnitt der in Figur 2 dargestellten Manschette entlang der Spannvorrichtung 18

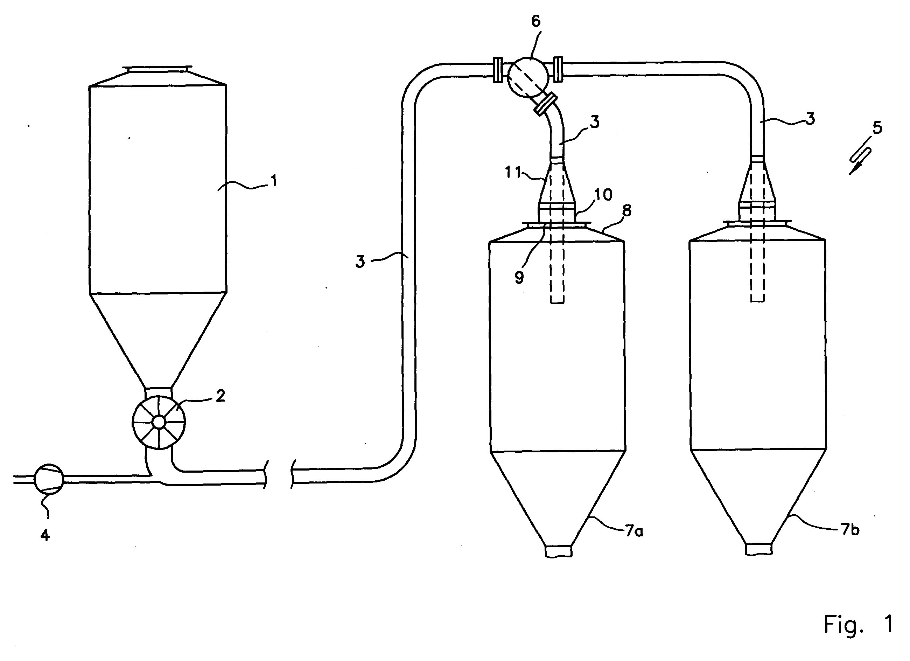

Die in Figur 1 dargestellte pneumatische Förderanlage umfaßt einen Aufgabebehälter 1, aus dem mittels einer Zellenradschleuse 2 Schüttgut in eine Förderleitung 3 eingespeist wird. Das Schüttgut wird durch einen Fördergasstrom, der von einem Verdichter 4 bereitgestellt wird, durch die Förderleitung 3 in Richtung einer Silobatterie 5 gefördert. Eine in der Förderleitung 3 angeordnete Weiche 6 verteilt den pneumatisch geförderten Schüttgutstrom wahlweise auf eine der abzweigenden Segmente der Förderleitung 3 und ermöglicht das gezielte Befüllen einzelner Schüttgutsilos 7a, 7b. Im Betriebsszustand nach Figur 1 wird der Schüttgutsilo 7a mit Schüttgut beschickt.

Um zu verhindern, daß der eintretende Schüttgutstrom beim Befüllen geräuschvoll auf den Seitenwände der Schüttgutsilos 7 auftrifft, ragt die von oben senkrecht durch das Silodach 8 geführte Förderleitung 3 in das Innere des Schüttgutsilos 7 hinein. Die Durchtrittsöffnung 9 im Silodach 8 ist mit einem nach außen ragenden Rohrstutzen 10 versehen, wobei der Innendurchmesser von Rohrstutzen 10 und Durchtrittsöffnung 9 größer ausgeführt sind als der Außendurchmesser der eintretenden Förderleitung 3. Schüttgutsilo 7 und die über eine gesonderte Stützkonstruktion gelagerte Förderleitung 3 sind auf diese Weise mechanisch voneinander entkoppelt.

Zwischen Rohrstutzen 10 und Förderleitung 3 ist eine elastische, sich nach unten konisch erweiternde, in Längsrichtung teilbare Manschette 11 angeordnet, die endseitig mittels nicht dargestellter Spannschellen wasser- und gasdicht auf den Umfang von Rohrstutzen 10 und Förderleitung 3 gespannt ist.

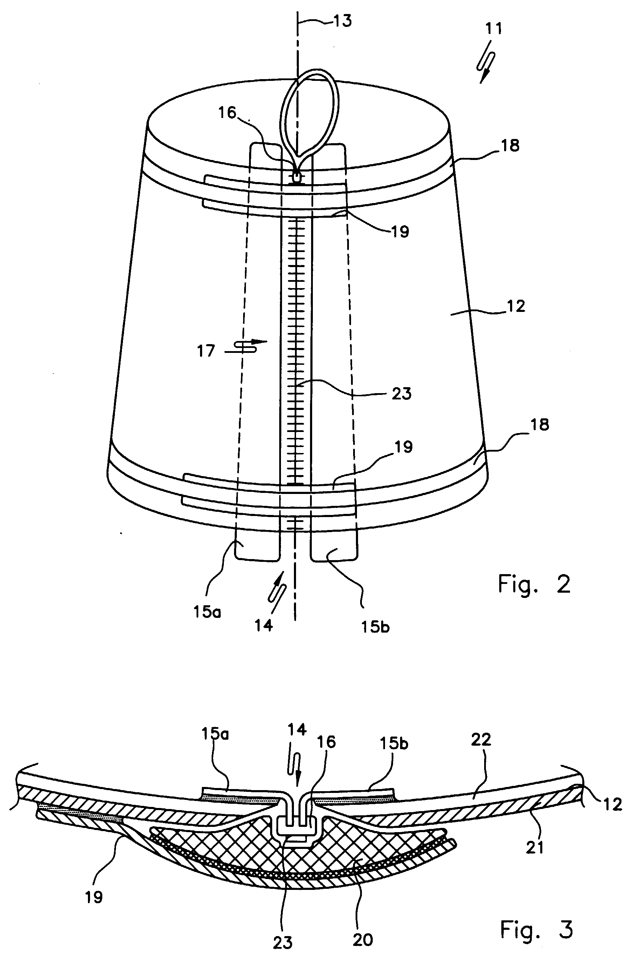

Figur 2 zeigt eine vergrößerte Darstellung einer erfindungsgemäßen Manschette 11. Der Mantel 12 der konischen Manschette 11 ist einstückig ausgeführt und entlang der Erzeugenden 13 des Konus mit einer Längsteilung 14 versehen. Beiderseits der Längsteilung 14 sind die Segmente 15a, 15b eines als Reißverschlusses 16 ausgeführten Verschlußmittels 17 angeordnet, der in Richtung des sich verjüngenden Endes der Manschette 11 verschließbar ist. Bei der Montage wird der Reißverschluß 16 geöffnet, so daß die Manschette 11 oberhalb des Silodachs 8 mühelos um die Förderleitung 3 herumgelegt werden kann.

Nach dem Schließen des Reißverschlusses 16 wird die Manschette 11 durch auf dem ihrem Außenumfang anbringbare, als Spannschellen ausgeführte Spannvorrichtungen 18 dichtend auf den Rohrstutzen 10 und die Förderleitung 3 gespannt. Um zu vermeiden, daß die Spannvorrichtungen 18 den Reißverschluß 16 beim Verspannten beschädigen, wird dieser in den betreffenden Bereichen von Laschen 19 aus einem elastomeren Werkstoff abgedeckt. Unter den Laschen 19 sind, wie aus Figur 3 ersichtlich, zusätzlich verformbare Pufferelemente 20 angeordnet.

Aus Figur 3 ist der strukturelle Aufbau des Mantels 12 der Manschette 11 im Bereich des Reißverschlusses 16 vor dem Anziehen der Spannvorrichtungen 18 im Detail ersichtlich.

Der Mantel 12 ist aus einer außenliegenden Schicht 21 und einer innenliegenden Schicht 22 zusammengesetzt, die stoffschlüssig miteinander verbunden sind. Die außenliegende Schicht 21 ist nach der Montage der Manschette 11 Umgebungseinflüssen ausgesetzt und wird aus einem witterungsbeständigen, insbesondere UV- und ozonresistenten Elastomerwerkstoff gefertigt. Ein geeignetes Material ist beispielsweise ein mit Rußpigmenten versehener, chlorsulfonierter Polyäthylen-kautschuk. Die innenliegende, vor Witterungseinflüssen geschützte Schicht 22 kann aus im wesentlichen ungefärbtem Chloroprenpolymerisat oder Isoprenpolymerisat bestehen. Bei hohen Anforderungen an die Chemikalienbeständigkeit können für die innenliegende Schicht 22 auch farbneutrale Propylen-Tetrafluoräthylen-Kautschuke Anwendung finden. Gleiches gilt für die übrigen, dem Inneren des Schüttgutsilos zugewandten Bauteile der Manschette 11. Durch die Farbgebung der innenliegenden Schicht 22 wird ausgeschlossen, daß das Schüttgut durch fremdfarbige, insbesondere dunkle Partikel aus dem Werkstoff des Mantels 12 verschmutzt wird.

Außen- und innenliegende Schicht 21, 22 werden vor dem einstückigen Zuschnitt des Mantels 12 durch Vulkanisation miteinander verbunden.

Die Segmente 15a, 15b des Reißverschlusses 16 werden entlang der Längsteilung 14 des Mantels 12 mit der innenliegenden Schicht 22 verklebt. An der außenliegenden Schicht 21 werden, ebenfalls durch Verkleben, die Laschen 19 schwenkbar angebracht, die an ihrem freien Ende über ein Klebemittel jeweils mit einem Pufferelement 20 verbunden sind. Das verformbare Pufferelement 20 ist so ausgeformt, daß es die aus dem Längsschnitt hervorragende Verzahnung 23 des Reißverschlusses 16 schützend umgreift. Eine Beschädigung des Reißverschlusses 16 durch das Anziehen der Spannvorrichtungen 18 wird auf diese Weise sicher vermieden.

Die Erfindung ist selbstverständlich nicht auf das Ausführungsbeispiel beschränkt. Die Manschette kann je nach Anschlußsituation beispielsweise auch zylinderförmig oder balgenartig ausgeführt sein. Ebenso kann die Längsteilung des Mantels in einer von der Erzeugenden abweichenden Richtung vorgenommen werden.

### Bezugszeichenliste

- 1: Aufgabebehälter
- 2: Zellenradschleuse
- 3: Förderleitung
- 4: Verdichter
- 5: Silobatterie
- 6: Weiche
- 7: Schüttgutsilo
- 8: Silodach
- 9: Durchtrittsöffnung
- 10: Rohrstutzen
- 11: Manschette
- 12: Mantel
- 13: Erzeugende
- 14: Längsteilung
- 15: Segment
- 16: Reißverschluß
- 17: Verschlußmittel
- 18: Spannvorrichtung
- 19: Lasche
- 20: Pufferelement
- 21: außenliegende Schicht
- 22: innenliegende Schicht
- 23: Verzahnung

## Patentansprüche

1. Elastische Manschette für die Verbindung einer pneumatischen Förderleitung (3) mit einem Schüttgutsilo (7), dadurch gekennzeichnet, daß die Manschette (11) eine mit Verschlußmitteln (17) versehene Längsteilung (14) aufweist.

2. Manschette nach Anspruch 1, dadurch gekennzeichnet, daß das Verschlußmittel (17) wasser- und/oder druckdicht verschließbar ist.

3. Manschette nach Anspruch 1 oder 2, dadurch gekennzeichnet, daß das Verschlußmittel (17) als Reißverschluß (16) ausgebildet ist.

4. Manschette nach einem der vorhergehenden Ansprüche, dadurch gekennzeichnet, daß die Manschette (11) eine im wesentlichen konische Gestalt aufweist.

5. Manschette nach einem der vorhergehenden Ansprüche, dadurch gekennzeichnet, daß diese durch die Manschette (11) umgreifende Spannvorrichtung (18) dichtend auf die zu verbindenden Bauteile spannbar ist.

6. Manschette nach Anspruch 5, dadurch gekennzeichnet, daß das Verschlußmittel (17) zumindest im Bereich der Spannvorrichtung durch eine Lasche (19) und/oder ein Pufferelement (20) aus elastischem Werkstoff abdeckbar ist.

7. Manschette nach einem der Ansprüche 1 bis 6, dadurch gekennzeichnet, daß die Manschette (11) einen zumindest zweischichtigen Aufbau aufweist, wobei die in montiertem Zustand außenliegende Schicht (21) witterungsbeständig ausgeführt ist, während in innenliegende Schicht (22) aus einem gegenüber dem Schüttgut farblich und/oder chemisch inerten Werkstoff besteht.
